Europäisches Patentamt

European Patent Office

Office européen des brevets

(11) Veröffentlichungsnummer: **0 205 781**

**A2**

(12) **EUROPÄISCHE PATENTANMELDUNG**

(21) Anmeldenummer: **86104561.5**

(51) Int. Cl.⁴: **G06F 7/22**

(22) Anmeldetag: **03.04.86**

(30) Priorität: **15.06.85 DE 3521610**

(43) Veröffentlichungstag der Anmeldung:
**30.12.86 Patentblatt 86/52**

(84) Benannte Vertragsstaaten:
**AT BE CH DE FR GB IT LI LU NL SE**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Zimmermann, Werner
Unterer Sommerwald
D-6780 Pirmasens(DE)**
Erfinder: **Hauser, Karl-Heinz
Gartenstr. 23
D-8206 Bruckmühl(DE)**

(54) **Gerät zum Erkennen relativer Extrema.**

(57) Vorgestellt wird ein Gerät zum Erkennen relativer Extrema in einer streuenden, digitalen Datenwortfolge, das aus wenigen, einfachen Bauelementen besteht und einen je nach Vorzeichen des Wortvergleichs zwischen zwei aufeinanderfolgenden Worten ein positives oder negatives Logiksignal erzeugenden Komparator (10) sowie einen innerhalb eines begrenzten Zahlenbereichs arbeitenden, die Komparator-Ausgangssignale auf-bzw. abwärtszählenden Zähler (16) und einen beim Über- oder Unterschreiten eines vorgegebenen Zählerstandes ansprechenden Schwellwertdetektor - (28, 30, 32) zur Maximum-oder Minimumanzeige enthält und aufgrund seiner baulich und operativ einfachen Ausbildung eine Echtzeitverarbeitung von streuenden Datenwortfolgen mit hoher Wortfrequenz (500 MHz) gewährleistet.

EP 0 205 781 A2

### Gerät zum Erkennen relativer Extrema

Die Erfindung bezieht sich auf ein Gerät zum Erkennen relativer Extrema einer streuenden, digitalen Datenwortfolge nach dem Oberbegriff des Patentanspruchs 1.

Bekannte Geräte dieser Art, die in der Lage sind, bei der Extremwerterkennung einer digitalen Datenwortfolge Streuwerte auszugleichen, haben eine komplizierte Funktions-und Bauweise und eine dementsprechend begrenzte Arbeitsgeschwindigkeit, so daß sie für eine Echtzeitverarbeitung von Wortmengen, die in dichter Folge, etwa mit einer Frequenz von 500 MHz anfallen, nicht geeignet sind.

Aufgabe der Erfindung ist es, ein Gerät der beanspruchten Art zu schaffen, das einen stark vereinfachten Aufbau und eine extrem hohe Arbeitsgeschwindigkeit besitzt.

Diese Aufgabe wird erfindungsgemäß durch das im Anspruch 1 gekennzeichnete Gerät gelöst.

Bei dem erfindungsgemäßen Gerät wird mit wenigen, einfachen Schaltgliedern und auf der Basis sehr einfacher logischer Operationen eine äußerst schnelle Extremumerkennung unter Einbeziehung von Streuwerten in der Weise gewährleistet, daß jeweils zwei aufeinanderfolgende Datenworte im Komparator zu einem logischen Ausgangssignal verknüpft, diese Logiksignale im nachgeschalteten Additionsregister aufsummiert und vom zugeordneten Schwellwertdetektor in Abhängigkeit vom Belegungs-bzw.Zahlenstand im Additionsregister jeweils An zeigesignale für ein Maximum oder Minimum geliefert werden, mit der Besonderheit, daß das Additionsregister nur innerhalb eines begrenzten Zahlenbereichs arbeitet und somit eine Art Zeitfenster bildet und der Schwellwertdetektor nur bei Überschreiten (oder aber bei Unterschreiten) eines vorgegebenen Zahlenwertes anspricht, der die Differenz der im Additionsregister berücksichtigten positiven und negativen Logiksignale des Komparators darstellt. Dies garantiert eine selbst unter Einbeziehung von Streuwerten hochgradig sichere Extremstellen-Erkennung, so daß sich das erfindungsgemäße Gerät in hervorragender Weise für Anwendungsfälle eignet, in denen die relativen Extrema einer streuenden, digitalen Datenwortfolge mit minimalem baulichen Aufwand sehr schnell und sicher angezeigt werden müssen.

Vorteilhafte Ausgestaltungen der Erfindung sind in den Ansprüchen 2 bis 9 gekennzeichnet. Durch die Ausbildung des Additionsregisters als Schieberegister gemäß Anspruch 2 wird eine weitere bauliche Vereinfachung erreicht. Die Begrenzung des Zahlenbereichs gemäß Anspruch 3 stellt sicher, daß der Schwellwertdetektor kurz nach der Anzeige einer Extremstelle erneut für die nächste Extremumanzeige ansprechbereit ist, also der Zahlenwert, der beim Überschreiten in der einen Richtung eine Extremumanzeige auslöst, mit Sicherheit in der entgegengesetzten Richtung (und ohne Extremumanzeige) durchschritten wird, bevor die nächste, gleichartige Extremstelle, d.h. ein Maximum oder Minimum, in der Wortfolge auftritt. Durch die Voreinstellung eines variablen Zahlenwertes gemäß Anspruch 4 läßt sich die Ansprechcharakteristik des Gerätes feinfühlig auf das jeweilige Streuverhalten der zu untersuchenden Wortfolge abstimmen und sicherstellen, daß bereits wenige Worte hinter einem Extremwert eine Maximum-oder Minimumanzeige erfolgt. Die Anordnung eines selektiv gesperrten, im übrigen aber herkömmlichen Digitalzählers gemäß Anspruch 5 bietet eine weitere, bauliche Vereinfachung, wobei der am Hilfskomparator variabel einstellbare Referenzwert wiederum eine Feinanpassung und Verkürzung der Ansprechzeit gestattet.

Um die Anzeigesicherheit weiter zu erhöhen, ist gemäß Anspruch 7 ausgangsseitig des Schwellwertdetektors ein bistabiles, in der Sperrstellung eine Extremumanzeige blockierendes Schaltglied vorgesehen, durch das verhindert wird, daß streuwertbedingte Schwankungen im Additionsregister, die im Anschluß an eine Extremumanzeige um den vorgegebenen Zahlen-bzw. Referenzwert auftreten können, fälschlicherweise zu einer nochmaligen Extremumanzeige führen.

Das erfindungsgemäße Gerät läßt sich durch eine einfache Änderung der Schaltverbindung zwischen Komparator und Additionsregister gemäß Anspruch 9 entweder zur Maximum-oder zur Minimumerkennung verwenden. Wahlweise ist es jedoch ohne weiteres auch möglich, jedem der Komparatorausgänge ein Additionsregister sowie einen Schwellwertdetektor zuzuordnen, so daß das Gerät sowohl eine Maximumanzeige auf dem einen, dem gemeinsamen Komparator nachgeschalteten Operationsweg als auch eine Minimumanzeige auf dem dazu parallelen, zweiten Operationsweg liefert.

Schließlich empfiehlt es sich, dem Komparator einen Analog-Digitalwandler und einen Speicherschalter gemäß Anspruch 9 vorzuschalten, so daß auf einfache Weise und mit hoher Genauigkeit auch Analogsignale auf Extremstellen untersucht werden können.

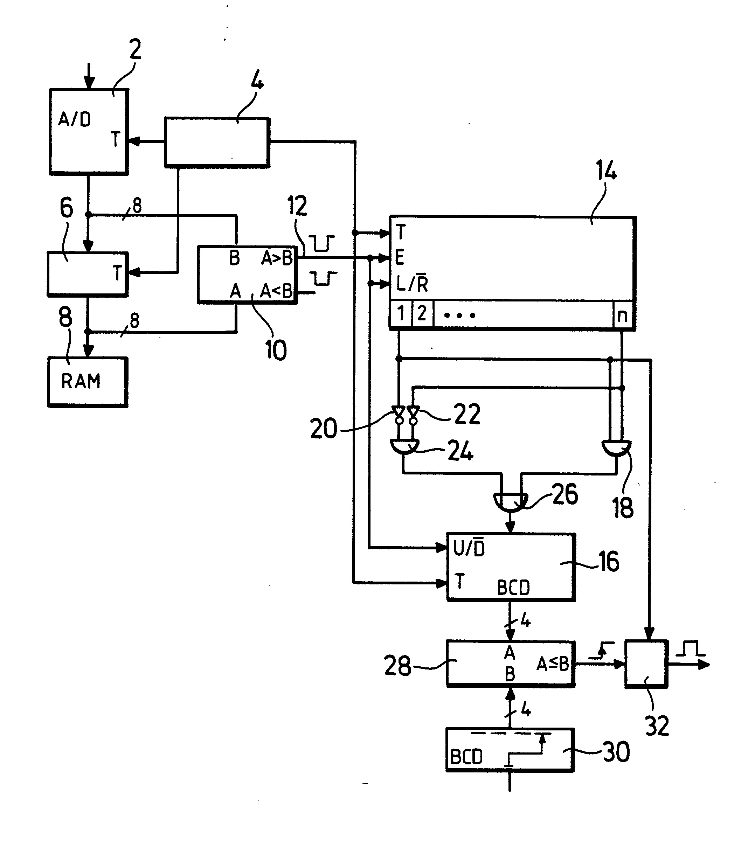

Die Erfindung wird nunmehr anhand eines Ausführungsbeispiels in Verbindung mit der Zeichnung näher erläutert, in deren einziger Figur ein Gerät zum Erkennen relativer Maxima eines analogen Meßsignals schematisch im Blockschaltbild dargestellt ist.

In einem Analog-Digitalwandler 2, der von einem Taktgenerator 4 gesteuert ist, wird ein am Wandlereingang anstehendes, analoges Meßsignal mit einer Wandelfrequenz, die ein Vielfaches der Frequenz des Meßsignals beträgt und z.B. bei 500 MHz liegt, in eine digitale Datenwortfolge umgewandelt. Dem Wandler 2 nachgeschaltet ist ein ebenfalls vom Taktgenerator 4 gesteuerter, gegenüber der Wandlerfrequenz jedoch um 180° phasenverschoben arbeitender Speicherschalter 6, von dessen Ausgang jedes Wort der Wortfolge einerseits in einen Adreßspeicher 8 und andererseits zum einen Eingang A eines Komparators 10 gelangt, während das unmittelbar nachfolgende Wort, das am Eingang des Speicherschalters 6 ansteht, an den anderen Komparator-Eingang B geschaltet wird. Wenn das Wort am Eingang A größer als das Wort am Eingang B ist, erzeugt der Komparator 10 an seinem Ausgang 12 ein negatives, ansonsten aber ein positives Logiksignal.

In einem eingangsseitig an den Komparator-Ausgang 12 angeschlossenen, ebenfalls taktgesteuerten Schieberegister 14 werden die positiven und negativen Komparator-Ausgangssignale mit der Wandelfrequenz in der Weise durchgeschoben, daß der Schieberegisterinhalt bei einem negativen Logiksignal um eine Stelle nach rechts verschoben und die freigewordene, erste Schieberegisterstelle negativ (mit Null) belegt wird, während bei einem positiven Komparator-Ausgangssignal das Schieberegister 14 nach links verschoben und die dadurch frei gewordene, letzte Schieberegisterstelle positiv - (mit Eins) belegt wird. Das Schieberegister 14 arbeitet in einem begrenzten, der Anzahl der Schieberegisterstellen entsprechenden Zahlenbereich und bildet eine Art Zeitfenster für die Datenwortfolge, d.h. die Anzahl der Schieberegisterstellen beträgt nur einen Bruchteil der Anzahl der während einer Periode des Meßsignals erzeugten Komparatorausgangssignale.

Am Komparatorausgang 12 liegt ferner ein ebenfalls taktgesteuerter, ein positives Logiksignal auf-/und ein negatives Logiksignal abwärtszählender Binärzähler 16. Um den Zählbereich des Zählers 16 auf den durch die Anzahl der Schieberegisterstellen vorgegebenen Zahlenbereich zu begrenzen, wird der Zähler 16 selektiv gesperrt, wenn sämtliche Schieberegisterstellen gleichartig, also entweder negativ ( 0 ) oder positiv ( I ) belegt sind. Zu diesem Zweck ist die erste und letzte Schieberegisterstelle einerseits über ein Und-Glied 18 und zum anderen jeweils über ein Negationsglied 20 bzw. 22 und ein weiteres Und-Glied 24 an ein Oder-Glied 26 angeschlossen, das am Sperrsignaleingang des Zählers 16 liegt und immer dann eine Zählersperre bewirkt, wenn sowohl die erste als auch die letzte Schieberegisterstelle (und wegen der beschriebenen Schieberegister-Ansteuerung auch alle dazwischenliegenden Registerstellen) entweder positiv belegt sind, also das Und-Glied 18 ein Sperrsignal abgibt, oder aber negativ besetzt sind, also das Und-Glied 24 anspricht.

Der Zähler-Ausgang liegt am Eingang A eines Hilfskomparators 28, dessen anderer Eingang B an einen auf einen veränderlich wählbaren Referenzwert einstellbaren, binärkodierten Referenzwertgeber 30 angeschlossen ist. Wenn der Zählerstand auf oder unter den am Referenz wertgeber 30 gewählten Zahlenwert abfällt, liefert der Hilfskomparator 28 ein Ausgangssignal an ein bistabiles Schaltglied 32, das in die Freigabestellung gelangt, sobald die erste Schieberegisterstelle positiv belegt wird, beim Durchgang eines Hilfskomparator-Ausgangssignals jedoch durch dessen Anstiegsflanke in die Sperrstellung umgeschaltet wird und in dieser verbleibt, bis die erste Schieberegisterstelle erneut positiv belegt wird. Der in der Freigabestellung durchgeschaltete Ausgangsimpuls des Schaltgliedes 32 bildet ein Maximum-Anzeigesignal und kann dazu verwendet werden, den entsprechend zugeordneten Extremwert aus dem Adreßspeicher 8 abzurufen.

Ein typischer Arbeitszyklus des Gerätes wird nachfol gend kurz beschrieben:

Es sei angenommen, daß das Analogsignal vom Wandler 2 auf einer Anstiegsflanke abgetastet wird, also der Komparator 10 in der Mehrzahl der Abtasttakte ein positives Ausgangssignal liefert. Das Schieberegister 14 wird somit von rechts nach links zunehmend positiv belegt und dementsprechend erhöht sich der Zählerstand im Zähler 16. Streuwertbedingte, negative Ausgangssignale des Komparators 10 bewirken zwar eine Verringerung der positiv belegten Schieberegisterstellen und ein Absinken des Zählerstandes, jedoch ist ihre Streuwirkung bereits nach wenigen Abtasttakten wieder verschwunden. Wenn sämtliche Schieberegisterstellen, z.B. zwanzig, positiv belegt sind und der Zähler 16 auf einen entsprechenden Zählerstand - (20) hochgelaufen ist, wird der Zähler 16 über das Und-Glied 18 für eine weitere Aufwärtszählung gesperrt und das Schaltglied 32 infolge der positiven Belegung der ersten Schieberegisterstelle in die Freigabestellung umgeschaltet.

Beim weiteren Abtasten der Anstiegsflanke des Meßsignals verbleiben die Anzahl der positiv belegten Schieberegisterstellen und der Stand des Zählers 16 auf dem Höchstwert oder sinken allenfalls -streuwertbedingt -um einen begrenzten, vom Streuverhalten des Meßsignals abhängigen Zahlenwert, so daß nunmehr bis zum Erreichen eines Maximums eine bestimmte Anzahl von positiv belegten Schieberegisterstellen und ein bestimmter Zählerstand, z.B. fünfzehn, nicht mehr unterschritten werden. Diesem, durch die Streucharakteristik der Datenwortfolge vorgegebenen Zählerstand entspricht der am Wertgeber 30 vorgewählte Referenzwert.

Wird das Maximum überschritten, so kehren sich die Verhältnisse um, d.h. am Komparatorausgang 12 überwiegen die negativen Logiksignale, mehr und mehr Schieberegisterstellen werden von links nach rechts negativ (mit Null) belegt und der Zählerstand des Zählers 16 fällt um die Anzahl der negativ belegten Schieberegisterstellen unter seinen Höchststand. Die sich diesem Vorgang überlagernden, gegensinnigen, streuwertbedingten Abweichungen verbleiben innerhalb des je nach Streuverhalten des Analogsignals durch Einstellung des Referenzwertgebers 30 vorgewählten Zahlenwertes, im Beispielsfall also 5 = Zählerhöchststand ( 20 ) -Referenzwert ( 15 ). Sobald der Zählerstand den Referenzwert unterschreitet, schaltet der Hilfskomparator 28 ein Ausgangssignal an das Schaltglied 32, das sich in der Freigabestellung befindet, durch das Ausgangssignal aber in die Sperrstellung umgeschaltet wird und infolgedessen an seinem Ausgang einen nur kurzen, das Vorhandensein eines Maximums anzeigenden Impuls, z.B. von der Länge eines Arbeitstaktes, liefert. Das zugeordnete Wort kann als Maximalwert gespeichert werden.

Beim weiteren Abtasten der Abstiegsflanke bleibt das Schaltglied 32 gesperrt, so daß kein Anzeigeimpuls freigegeben wird, und wenn auch die letzte Stelle des Schieberegisters 14 negativ belegt wird, erreicht der Zähler 16 die untere Grenze seines Zählbereichs (Zählerstand: 0) und wird über das Und-Glied 24 für eine weitere Abwärtszählung gesperrt. Wird nach Durchwandern eines Minimums erneut eine Anstiegsflanke des Meßsignals abgetastet, so wiederholt sich der beschriebene Arbeitszyklus, d.h. aufgrund der steigenden Werte der digitalen Wortfolge wird das Schieberegister 14 mehr und mehr positiv belegt und der Zählerstand des Zählers 16 läuft hoch, bis auch die erste Schieberegisterstelle positiv belegt wird, woraufhin der Zähler 16 für die weitere Aufwärtszählung gesperrt und zugleich das Schaltglied 32 in die für ein Ausgangssignal des Hilfskomparators 28 durchgängige Freigabestellung umgeschaltet wird.

Im Rahmen des beschriebenen Bau-und Operationsprinzips sind zahlreiche Abwandlungen möglich. So können bei fallenden Werten der Datenwortfolge positive anstatt negative Logiksignale des Komparators 10 in das Schieberegister 14, oder ganz allgemein in ein Additionsregister, eingegeben und vom Hilfskomparator 28 immer dann Ausgangssignale erzeugt werden, wenn der Zähler 16 einen innerhalb des Zahlenbereichs des Additionsregisters durch Einstellung des Referenzwertgebers 30 vorgewählten Zahlenwert über-anstatt unterschreitet. Wahlweise oder zusätzlich kann ferner zur Minimumerkennung eine zur Baugruppe 14 bis 32 identische Anordnung an den zweiten (unbesetzt gezeigten) Ausgang des Komparators 10 angeschlossen sein.

**Ansprüche**

1. Gerät zum Erkennen relativer Extrema einer streuenden, digitalen Datenwortfolge, **gekennzeichnet** durch einen jedes Wort der Wortfolge mit dem unmittelbar nachfolgenden Wort vergleichenden Komparator (10), der abhängig vom Vorzeichen des Wortvergleichs ein positives oder negatives logisches Ausgangssignal liefert, ein eingangsseitig an den Komparator-Ausgang (12) angeschlossenes Additionsregister (14), dessen Inhalt innerhalb eines begrenzten Zahlenbereichs jeweils durch ein positives Komparator-Ausgangssignal um Eins erhöht und durch ein negatives Komparator-Ausgangssignal um Eins erniedrigt wird, und einen dem Additionsregister zugeordneten, beim Über- oder Unterschreiten eines innerhalb des begrenzten Zahlenbereichs vorgegebenen Zahlenwertes im Additionsregister ansprechenden, ein Extremum anzeigenden Schwellwertdetektor (16 bis 32).

2. Gerät nach Anspruch 1, dadurch **gekennzeichnet,** daß als Additionsregister ein Schieberegister (14) mit einer der Größe des begrenzten Zahlenbereichs entsprechenden Anzahl von Schieberegisterstellen (n) vorgesehen ist, dessen Dateninhalt durch ein positives Komparator-Ausgangssignal in der einen Richtung und unter positiver Belegung der freigewordenen Schieberegisterstelle und durch ein negatives Komparator-Ausgangssignal in der entgegengesetzten Richtung und unter negaitver Belegung der freigewordenen Schieberegisterstelle verschiebbar ist, wobei der Schwellwertdetektor (16 bis 32) beim Überschreiten einer vorgegebenen Anzahl von positiv oder negativ belegten Schieberegisterstellen anspricht.

3. Gerät nach Anspruch 1 oder 2, dadurch **gekennzeichnet,** daß die Größe des begrenzten Zahlenbereichs bzw. die Anzahl der Schieberegisterstellen (n) um ein Vielfaches kleiner als die Wortanzahl zwischen zwei aufeinanderfolgenden Extrema in der Datenwortfolge bemessen ist.

4. Gerät nach einem der vorhergehenden Ansprüche, dadurch **gekennzeichnet,** daß der Schwellwertdetektor (16 bis 32) auf einen veränderlich vorgebbaren Zahlenwert voreinstellbar ist.

5. Gerät nach einem der Ansprüche 2 bis 4, dadurch **gekennzeichnet,** daß der Schwellwertdetektor (16 bis 32) einen ein positives Komparator-Ausgangssignal aufwärts-und ein negatives Komparator-Ausgangssignal abwärtszählenden, bei gleichartiger Belegung der ersten und letzten Schieberegisterstelle (1, n) gesperrten Zähler (16) sowie einen dem Zähler zugeordneten, bei Über- oder Unterschreiten des Zählerstandes bezüglich eines vorgegebenen Referenzwertes ein Ausgangssignal zur Extremumanzeige erzeugenden Hilfskomparator (28) enthält.

6. Gerät nach Anspruch 5, dadurch **gekennzeichnet,** daß der dem Zähler (16) zugeordnete Hilfskomparator (28) auf einen variablen Referenzwert voreinstellbar ist.

7. Gerät nach einem der vorhergehenden Ansprüche, dadurch **gekennzeichnet,** daß der Schwellwertdetektor (16 bis 32) ein im Zuge des Anzeigesignalausgangs angeordnetes, bistabiles Schaltglied (32) enthält, das nach Durchgang eines Anzeigesignals in die Sperrstellung und bei Erreichen der Zahlenbereichsgrenze im Additionsregister (14) in die Freigabestellung umschaltet.

8. Gerät nach einem der vorhergehenden Ansprüche, dadurch **gekennzeichnet,** daß das Additionsregister (14) zur Maximumerkennung dem durch ein größeres Wort am einen als am anderen Eingang (A, B) aktivierten Ausgang (12) des Komparators (10) und zur Minimumerkennung dem im umgekehrten Fall aktivierten Komparator-Ausgang nachgeschaltet ist.

9. Gerät nach einem der vorhergehenden Ansprüche, dadurch **gekennzeichnet,** daß zur Extremumerkennung analoger Meßgrößen den Eingängen (A, B) des Komparators (10) ein Analog-Digitalwandler (2) mit zugeordnetem Taktgenerator (4) und ein synchron zum Wandeltakt, jedoch phasenverschoben gesteuerter Speicherschalter (6) vorgeschaltet sind.

0 205 781